# EUROPÄISCHE PATENTSCHRIFT

(11) **EP 1 507 095 B1**
(45) Veröffentlichungstag und Bekanntmachung des Hinweises auf die Patenterteilung: **28.06.2006**
(21) Anmeldenummer: 04006154.1
(22) Anmeldetag: 16.03.2004
(51) Int. Cl.: F16F 1/36, F16F 15/04

(54) **Vorrichtung zur kontrollierten Lagerung von Bauteilen auf Schwingungsdämpfern**
Device for the controlled support of parts on vibration dampers
Dispositif pour le soutien contrôlé de pièces sur des amortisseurs de vibration

(30) Priorität: 13.08.2003 DE 10337208
(43) Veröffentlichungstag der Anmeldung: 16.02.2005
(73) Patentinhaber: Airbus Deutschland GmbH, 21129 Hamburg (DE)
(72) Erfinder: Steinbeck, Herbert, Dipl.-Ing., 21149 Hamburg (DE)
(74) Vertreter: Hansmann, Dierk

(56) Entgegenhaltungen:
- DE-A1- 2 131 917
- DE-A1- 4 141 850
- US-A- 2 367 830
- US-A- 2 940 784
- PATENT ABSTRACTS OF JAPAN Bd. 2003, Nr. 02, 5. Februar 2003 (2003-02-05) -& JP 2002 295440 A (ISUZU MOTORS LTD), 9. Oktober 2002 (2002-10-09)

## Beschreibung

Die Erfindung bezieht sich auf eine Vorrichtung zur kontrollierten Lagerung von Bauteilen auf Schwingungsdämpfern, mit der Maßabweichungen eines gelagerten Bauteils in drei Ebenen durch einen Einstellmechanismus der Vorrichtung ausgeglichen und die Einsinktiefe in den Schwingungsdämpfern visuell angezeigt wird.

Es sind formschlüssige und kraftschlüssige mechanische Lagerungen auf Schwingungsdämpfern bekannt, die ebenfalls Maßabweichungen ausgleichen, jedoch unter Verwendung von angepassten Profil-Unterlagen, bspw. von Shim -Blechen o.ä., und / oder durch den Einsatz zusätzlicher Verbindungselemente. Diese Maßabweichungen können auf konstruktiven Toleranzen beruhen und /oder auf anlagebedingte Toleranzen der Fertigungsmittel für die Herstellung der zu verbindenden Einzelteile zurückgehen. Ebenso sind Maßabweichungen aufgrund eines nachträglichen, materialbedingten Verzugs dieser gelagerten Bauteile und / oder des Unterbaus der Lagerung denkbar, wobei die Maßabweichungen ursächlich auch auf die eingesetzten Schwingungsdämpfer selbst zurückgehen können. Auch ist, bedingt durch die Verwendung von zusätzlichen losen Teilen bei derartigen Lagerungen, für die Montage ein erhöhter Raumbedarf (mehr Einbauraum) erforderlich. Wegen der zusätzlichen Einzelteile weisen diese Verbindungen auch ein höheres Gesamtgewicht auf. Derartige Verbindungen sind aufgrund der zusätzlichen Elemente kostenintensiver und erfordern einen höheren Zeitaufwand bei der Montage. Bedenkt man weiterhin, dass die beste Wirksamkeit eines Schwingungsdämpfers dann erreicht wird, wenn sich bei Nennlast die Einsinktiefe im optimalen Bereich der Kennlinie des Schwingungsdämpfers befindet, dann sind keine Lagerungen auf Schwingungsdämpfern bekannt, die eine Anzeige der aktuellen Einsinktiefe in das Dämpfungselement umsetzen. Dieser Umstand macht sich insbesondere bei einer schwer zugänglichen Einbauposition der installierten Schwingungsdämpfer nachteilig bemerkbar.

Außerdem ist aus der Druckschrift: "DE 41 41 850 C2" ein elastisches Lagerelement bekannt, mit dem die Abstützung eines Bauteils gegenüber einem Fundament realisiert wird. Dieses Lagerelement besteht aus einem Lager-Unterteil, einer Lagerkappe und einem zwischen den beiden Teilen liegenden Elastomerblock. Das abzustützende Bauteil, beispielsweise ein (nach der Druckschrift vorgesehener) Motor- oder Getriebefuß, wird gegenüber der Lagerkappe verspannt. Zu diesem Zweck ist eine Zentral-Befestigungsschraube in ein Zwischenteil eingeschraubt, welches sich gegen die Lagerkappe abstützt. Zum Verspannen ist eine Mutter vorgesehen. Zwischen dem Bauteil und der Lagerkappe ist ein Höhenverstellungsteil angeordnet, welches sich in ein Unterteil und ein Oberteil gliedert. Das Oberteil kann mittels einem Gewinde durch Verdrehen gegenüber dem Unterteil in seiner Höhe verstellt werden. Dabei ist vorgesehen, dass jenes Höhenverstellungsteil aus dem mit der Lagerkappe fest verbundenen Unterteil und einem mittels dem Gewinde gegenüber dem Unterteil höhenverstellbaren Oberteil gebildet wird. Diese Maßnahme ist deswegen erforderlich, um beispielsweise eine Fluchtung einer (in der Figur der Druckschrift) nicht dargestellten Motorwelle mit Getriebeteilen zu gewährleisten.

Zur Überprüfung der Höhenlage des Bauteils weist die Zentral-Befestigungsschraube eine Zentralbohrung auf, durch die sich ein Gewindebolzen einführen lässt. Der Gewindebolzen weist an seinem oberen Ende eine Überwurfkappe auf, so dass zur variablen Festlegung eine Arretierung der Überwurfkappe gegenüber dem Gewindebolzen mit Hilfe einer selbstsichemden Sechskantmutter ausführbar wird. Hinzukommend ist vorgesehen, dass der Gewindebolzen in der Zentralbohrung sich in einer vorgegebenen Position durch eine Kugelarretierung arretieren lässt. Alternativ besteht auch die Möglichkeit, dass das Höhenverstellungsteil aus sogenannten Beilagscheiben gebildet wird, welche zwischen der Lagerkappe und dem Bauteil eingeschoben werden.

Dieses Lagerelement, bei dem die Notwendigkeit eines Kompensierens von Setzvorgängen eines Elastomerblocks, der bspw. zur Abfederung und Schwingungsdämpfung verwendet wird, problemlos erkannt wird, ohne dass dafür geeignete Messgeräte eingesetzt werden, wird aufgrund der Funktionen seiner Bauelemente kaum geeignet sein, bestehende Maßabweichungen eines gelagerten Bauteils in allen drei Ebenen innerhalb einem vordefinierten Einstellbereich auszugleichen. Die Kompensation wird nur mit Hilfe einer Höhenverstellung (Höhenjustierung) am Lagerelement umgesetzt, wobei deren Erfordernis ursächlich auf ein zeitbedingtes Absenken des Elastomerblocks zurückgehen wird, dessen Werkstoff mit einer dem zeitlichen Einfluss unterliegenden Formveränderung des Elastomerblocks korrelieren wird, weshalb ein Absenken jenes Elastomerblocks wohl kaum beeinflusst werden kann.

Demzufolge liegt der Erfindung die Aufgabe zugrunde, eine Vorrichtung zur kontrollierten Lagerung von Bauteilen auf Schwingungsdämpfern anzugeben, mit der bestehende Maßabweichungen eines dermaßen gelagerten Bauteiles in allen drei Ebenen innerhalb einem vordefinierten Einstellbereich ausgeglichen werden. Des weiteren soll mit dieser Vorrichtung ein rationeller Austausch des Schwingungsdämpfers ermöglicht werden, ohne dass das gelagerte Bauteil in seiner Position verändert wird. Gleichfalls soll ein visueller Justiermechanismus vorgesehen werden, um die optimale Einstellung des gelagerten Bauteils mit Hilfe der Vorrichtung auf der Kennlinie des Schwingungsdämpfers kontrollierbar sicherzustellen, ohne das ein Sichtkontakt zum (möglichenfalls außerhalb einer zugänglichen Einbauposition befindlichen) Schwingungsdämpfer erforderlich wird.

Diese Aufgabe wird durch die im Anspruch 1 angegebenen Maßnahmen gelöst. In den weiteren Ansprüchen werden zweckmäßige Ausgestaltungen und Weiterbildungen dieser Maßnahmen angegeben.

Die Erfindung ist in einem Ausführungsbeispiel anhand der beigefügten Zeichnungen näher beschrieben.
Dazu zeigen die
- Fig. 1: eine Vorrichtung zur kontrollierten Lagerung von Bauteilen auf einem Schwingungsdämpfer;
- Fig. 2: die Aufnahme im bauteilebefestigten Halter der Vorrichtung nach Fig. 1;
- Fig. 3: die unbelastete Normaleinstellung einer Vorrichtung mit einem auf dem Schwingungsdämpfer lagernden Bauteil (visuelle Höhen-Anzeige);
- Fig. 4: die mit einem Justierstift sichtbare Einstellung der Vorrichtung nach Fig. 3 ohne Maßabweichung der Auflage, wobei der Justiermechanismus sich in seiner neutralen Position befindet und nicht betätigt wurde;
- Fig. 5: die Einstellung einer strukturell vertikal angehobenen Vorrichtung nach Fig. 4 mit einer Maßabweichung der strukturellen Auflage nach oben, welche durch den Justiermechanismus ausgeglichen wurde;
- Fig. 6: die Einstellung einer strukturell vertikal abgesenkten Vorrichtung nach der Fig. 4 mit einer Maßabweichung der strukturellen Auflage nach unten, welche durch den Justiermechanismus ausgeglichen wurde.

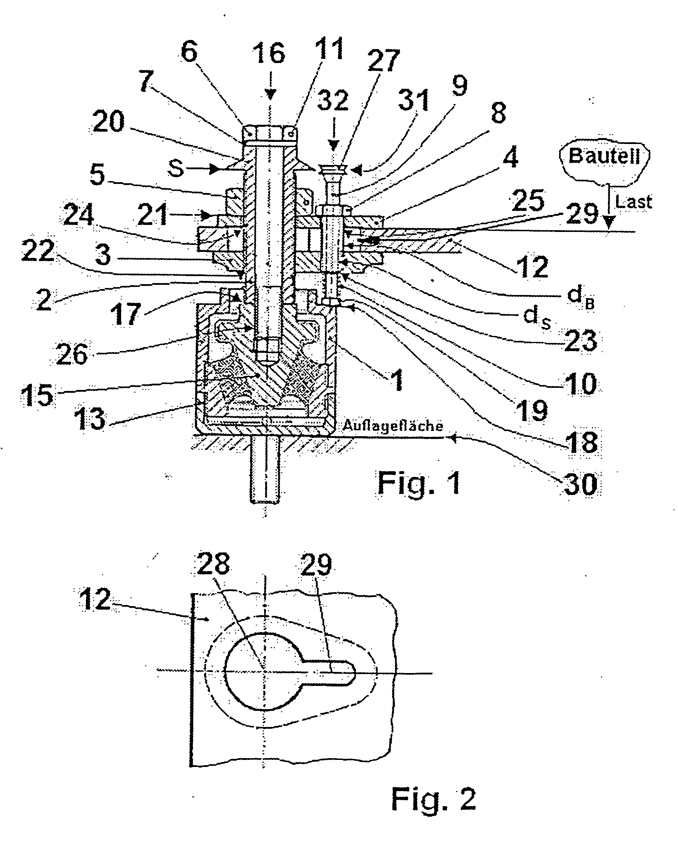

In der Fig. 1 wird der Aufbau der Vorrichtung zur kontrollierten Lagerung von Bauteilen auf einem Schwingungsdämpfer dargestellt, deren Wirkungsweise anhand dieser Darstellung erläutert wird. Die Vorrichtung umfasst zwei Klemmplatten 3 und 4, zwischen denen ein sogenannter Halter 12, der auch als "Lagerbock" bezeichnet wird, befestigt (respektive geklemmt) ist. Dieser Halter 12 ist an einem (figurlich allgemein dargestellten) Bauteil dermaßen befestigt, dass die Last(en) und die mechanischen Schwingungen über den Halter 12 und weitere zusätzliche Mittel (Verbindungs- und Befestigungselemente der Vorrichtung) auf einen Schwingungsdämpfer 1 gleichmäßig verteilt wird (werden). Letzterer wird über einen Dämpfungskörper 15 die auf ihn übertragene(n) Last(en) und , Körper-Schwingung(en) (des halterbefestigten Bauteils) aufnehmen und ausgleichen.

Der Aufbau der Vorrichtung wird in der Hauptsache durch eine untere Klemmplatte 3 (Gewindeplatte), eine obere Klemmplatte 4 (Lochplatte), eine Schraubenmutter 5 (Kontermutter), eine Befestigungskopfschraube 6, eine (sinnvollerweise schraubenkopfunterlegte) Unterlegscheibe 7, eine hohlkörperaxiale Einstellschraube 2, eine hohlkörperaxiale Führungskopfschraube 8, einen Justierstift 9, eine Druckfeder 10 und diversen Sicherungsdraht, der durch bezeichnete Sicherungslöcher 11 im betreffenden Schraubenkopf geführt wird, komplettiert.

Um das Verständnis für die späteren Erläuterungen zu nähren, wird die betreffende Vorrichtung folgendermaßen angeben. Der plattenartig gestaltete und bauteilverbundene Halter 12 (Lagerbock) ist konstruktiv so gestaltet und am Bauteil so befestigt, dass die Lasten gleichmäßig verteilt werden, wobei im ausgebauten Zustand des Halters 12 der Zugang zum Schwingungsdämpfer 1 für dessen Aus- und Einbau auf beengtem Lagerraum des Bauteils - je nach Bauart - auch aus dem Innenraum des Bauteils, an welchem die Halter 12 befestigt sind, sichergestellt wird.

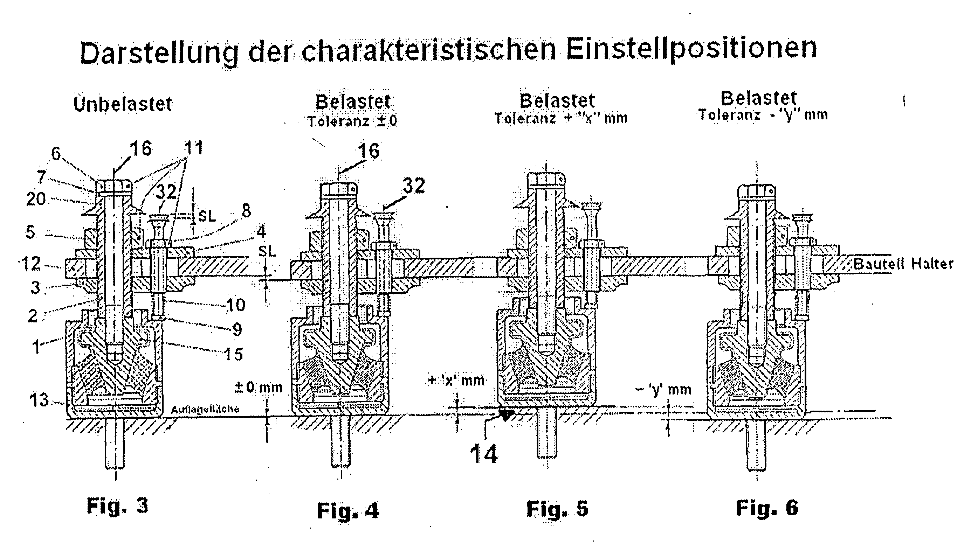

Der Schwingungsdämpfer 1 wird (zweckmäßiger Weise vor der Montage des Halters 12) an seinem Unterbau (nach Fig. 1) oder einem auf der Struktur 30 befestigten Stützkörper 14 (nach Fig. 5)] befestigt.

Die hohlkörperaxiale Einstellkopfschraube 2 wird durch die obere Klemmplatte 4 und den Halter 12 in die untere Klemmplatte 3 (Gewindeplatte) bis zu einer beispielsweise mittleren Einstellungsposition eingeschraubt und über den Befestigungsanschluss des Schwingungsdämpfers 1 bewegt, wobei durch die Beweglichkeit dieser Klemmplatten 3 und 4 die horizontalen Maßabweichungen ausgeglichen werden. Die Befestigungskopfschraube 6, welche in der hohlkörperaxialen Einstellkopfschraube 2 geführt ist, wird in den Schwingungsdämpfer 1 vorerst lose eingeschraubt, womit die Befestigungskopfschraube 6 in ihrer horizontalen Ebene positioniert ist. Hiermit ist die Position des am Halter 12 befestigten Bauteils in der horizontalen Ebene bestimmt. Nachdem alle Lagerungen des Bauteils horizontal ausgerichtet sind, wird die hohlkörperaxiale Einstellkopfschraube 2 in der unteren Klemmplatte 3 (Gewindeplatte) gedreht und damit die Höhe des Bauteils eingestellt, womit gleichzeitig alle vertikalen Maßabweichungen des Schwingungsdämpfers 1 mit seinem Unterbau und die Maßabweichungen des Bauteils ausgeglichen sind. Hiermit ist die Position des Bauteils in der vertikalen Ebene bestimmt. Nachdem die endgültige Position des [über den Halter 12 (Lagerbock)] klemmplattenbefestigten Bauteils erreicht ist, wird eine Schraubenmutter 5 (Kontermutter) an der hohlkörperaxialen Einstellkopfschraube 2 über die obere Klemmplatte 4 (Lochplatte) mit der unteren Klemmplatte 3 (Gewindeplatte) mit einem vorgegebenen SchraubenDrehmoment befestigt. Danach wird die Befestigungskopfschraube 6, welche in der hohlkörperaxialen Einstellkopfschraube 2 geführt ist, mit einem vorgegebenen Drehmoment an dem Schwingungsdämpfer 1 befestigt. Damit die eingespannten Verbindungen sich nicht lösen können, werden die Befestigungskopfschraube 11, ggf. auch die hohlkörperaxiale Einstellkopfschraube 2, die Schraubenmutter 5 (Kontermutter) und ggf. auch die hohlkörperaxiale Führungskopfschraube 8 mit einem Sicherungsdraht gegen Verdrehung bzw. Lösen der Schraubverbindung(en) gesichert. Die Lagerung auf entsprechenden Schwingungsdämpfern 1 kann je nach Anforderung und unter Berücksichtigung der sich in der Summe ergebenden auszugleichenden Maßabweichungen konstruktiv unterschiedlich ausgelegt werden. Für die Einstellung, die Befestigung und die Sicherung dieser Lagerung auf Schwingungsdämpfern 1 wird man in der Regel handelsübliches Werkzeug verwenden können.

Demnach wird eine Vorrichtung zur kontrollierten Lagerung von einem Bauteil auf einem Schwingungsdämpfer 1 angegeben, die Maßabweichungen in drei Ebenen ausgleicht und eine form- und kraftschlüssige Verbindung herstellt. Für die Einstellung des halterbefestigten Bauteils in der horizontalen Ebene wird die erwähnte hohlkörperaxiale Einstellkopfschraube 2 mit der oberen Klemmplatte 4 (Lochplatte), mit der unteren Klemmplatte 3 (Gewindeplatte) geführt, die fest mit dem Halter 12 (Lagerbock) des Bauteils verbundenen ist und sich innerhalb eines definierten Weges in beiden horizontalen Achsen verschieben und damit einstellen lässt.

Durch Drehung der hohlkörperaxialen Einstellkopfschraube 2 in der unteren Klemmplatte 3 (Gewindeplatte) mit-definierter Schraubenbolzen-Länge in der vertikalen Achse(nrichtung) wird der Halter 12 (Lagerbock) und damit das ihm befestigte Bauteil in der vertikalen Ebene verschoben (abgesenkt oder angehoben) respektive eingestellt. Die Schraubenmutter 5 (Kontermutter) wird nach Abschluss der horizontalen und vertikalen Einstellungen mit einem definierten Drehmoment angezogen, wodurch damit die horizontale Lage des Halters 12 (halterbefestigten Bauteils) kraftschlüssig und die vertikale Lage des Halters 12 (des halterbefestigten Bauteils) formschlüssig fixiert ist. Die Befestigungskopfschraube 6 wird zur abschließenden Befestigung des dermaßen eingestellten Halters 12 (des dermaßen lagefixierten Bauteils) mit einem vorgegebenen Drehmoment über die hohlkörperaxiale Einstellkopfschraube 2 mit dem Schwingungsdämpfer 1 formschlüssig verbunden. Der Justierstift 9 wird durch die hohlkörperaxiale Führungsschraube 8 geführt und in Verbindung mit der hohlkörperaxialen Einstellkopfschraube 2 die Einstellung über die (später erläuterten) Elemente: "Kimme" und "Korn" durchgeführt. Zum Austausch der Lagerteile und / oder des Schwingungsdämpfers 1 nach dem Lösen der Befestigungskopfschraube 6 aus dem Schwingungsdämpfer 1 und der klemmplattengekonterten Schraubenmutter 5 wird durch das Herausdrehen der Einstellkopfschraube 2 aus der unteren Klemmplatte 3 (Gewindeplatte) der Halter 12 (das halterbefestigte Bauteil) entlastet. Damit lassen sich die Teile der Vorrichtung ausbauen und in umgekehrter Reihenfolge wieder einbauen. Durch die Befestigung der hohlkörperaxialen Führungskopfschraube 8 wird eine Verdrehung beim Betätigen der hohlkörperaxialen Einstellkopfschraube 2 ausgeschlossen.

Diesen vorangestellten Bemerkungen wird der Vollständigkeit halber ergänzt, dass das Gehäuse 13 des Schwingungsdämpfers 1 (nach dem Beispiel der Fig. 1) mit der Grundfläche an einer Struktur 30 befestigt ist. Gehäuseintern ist diesem Schwingungsdämpfer 1 der bezeichnete Dämpfungskörper 15 angeordnet, der die auf ihn übertragenen mechanischen Belastungen [die übertragen Last(en) des halterbefestigten Bauteils und die Schwingungen (fremdübertragene mechanische Schwingungen und Eigenschwingungen des Bauteils)] aufnimmt. Mit diesem Dämpfungskörper 15 ist (entsprechend dem Kraftfluß der übertragenen Bauteil-Last) der erwähnte Halter 12 über weitere Verbindungs- und Befestigungsmittel der Vorrichtung mechanisch verbunden. So wird beispielsweise der Halter 12 - nach dem Vorbild der Figuren 1, 3, 4, 5 und 6 - an einem zu lagernden Bauteil befestigt, dessen Last über den Halter 12 und die angegebenen zusätzlichen Mittel der Vorrichtung auf den Schwingungsdämpfer 1 und in Folge auf seinen Unterbau (Struktur 30) übertragen wird.

Die untere und obere Klemmplatte 3 und 4 sind flächenparallel einer Auflagefläche 17 des Dämpfungskörpers 15, deren Lage weitestgehend mit der Grundfläche des Gehäuses 13 übereinstimmt, angeordnet, zwischen deren Auflageflächen 19 und 20 der Halter 12 geklemmt ist. Den Klemmplatten 3 und 4 sowie dem Halter 12 sind jeweils zwei Löcher, die entlang einer Plattenlängsachse 21 beabstandet angeordnet sind, ausgenommen.

Diese Löcher des vorbeschriebenen Klemmplatten-Halter-Aufbaus sind den beiden Klemmplatten 3 und 4 kongruent ausgenommen, die mit denjenigen Löchern des Halters 12 übereinanderliegend angeordnet sind, wobei die Löcher der unteren Klemmplatte 3 als ein erstes und zweites Gewindeloch 22 und 23 ausgebildet sind. So wird vorzugsweise - vorgreifend der Ausführungen hinsichtlich der Fig. 2 - (auch aus später erwähnten Gründen) vorgesehen, dass ein drittes Loch 28 des Halters 12 als Kreisloch und ein viertes Loch 29 des Halters 12 als Langloch ausgebildet ist, wobei deren Lochflächen durchgehend verbunden sind.

Im rechten Winkel stehend auf der Auflagefläche 17 des Dämpfungskörper 15 ist eine hohlkörperaxiale Einstellkopfschraube 2 positioniert, die durch ein erstes Loch 24 der oberen Klemmplatte 4 geführt ist. Das Schraubengewinde der Einstellkopfschraube 2 ist dem ersten Gewindeloch 22 bis zu einer mittleren Schraubeneinstellposition der unteren Klemmplatte 3 geschraubt.

In der Verlängerung einer ersten Schraubenachse 16 der Einstellkopfschraube 2 ist in der Auflagefläche 17 des Dämpfungskörpers 15 ein drittes Gewindeloch 26 eingelassen, in welchem eine Befestigungskopfschraube 6, geführt durch den Hohlraum der Einstellschraube 2 eingeschraubt ist. Letztere ist dermaßen geschraubt, dass der schraubenbolzenendseitige Schraubenhohlquerschnitt der Einstellkopfschraube 2 umfänglich dem dritten Gewindeloch 26 auf der Auflagefläche 17 des Dämpfungskörpers 15 befestigt ist.

Weiter ist dem Schraubenbolzen der gewindelochfixierten Einstellkopfschraube 2 oberhalb der oberen Klemmplatte 4 eine Schraubenmutter 5 aufgeschraubt, die mit einem definierten Schraubendrehmoment gegen die obere Klemmplatte 4 angezogen wird, wodurch die Lage des Halters 12 horizontal kraftschlüssig und die Lage des halterbefestigten Bauteils vertikal formschlüssig fixiert wird.

Außerdem ist durch ein zweites Loch 25 der oberen Klemmplatte 4 eine hohlkörperaxiale Führungskopfschraube 8 geführt, deren Schraubengewinde dem zweiten Gewindeloch 23 der unteren Klemmplatte 3 geschraubt ist. Der Schraubenkopf der Führungskopfschraube 8 wird mit einem definierten Schraubendrehmoment gegen die oberen Klemmplatte 4 angezogen.

Durch den Hohlraum der Führungskopfschraube 8 ist ein Justierstift 9 achsenbeweglich geführt, der im rechten Winkel stehend auf einer Stützfläche 18 positioniert ist. Letztere ist gehäuserandseitlich angeordnet und ist ein Teilbereich der Deckfläche des Gehäuses 13.

Am Stiftbolzen des Justierstiftes 9 ist (nach dem Vorbild der Fig. 1) bolzenbeweglich eine Druckfeder 10 angeordnet.

Der Querschnitt des Stiftbolzens ist dann (wegen der Einspannung der Druckfeder 10) bolzenendseitig verdickt, so dass die Federenden gegen diese Verdickung und gegen das Schraubenende der Führungskopfschraube 8 drücken können. Der Schraubenbolzen-Durchmesser d_{B} der Verdickung ist kleiner als der Loch-Durchmesser d_{S} der oberen Klemmplatte 4 im Bereich des Schraubenkopfes der Führungskopfschraube 8, damit dieser frei beweglich in der Klemmplatte 4 ist und somit auch eine zusätzliche Klemmung, ergänzend zur Kontermutter 5, ermöglicht. Dem wird ergänzt, dass (nach der Fig. 1) am oberen Ende des Justierstiftes 9 ein Messkopf mit einer rotationssymmetrisch keilförmigen Ausdrehung (Kimme) angeordnet ist.

Um den beabsichtigten Zweck der Kontrolle der Lagerung des Bauteils auf einem Schwingungsdämpfer umzusetzen, ist eine Flucht 31 zwischen dem Messkopf (Kimme) des Justierstiftes 9 und der Messunterkante des Schraubenkopfes der Einstellkopfschraube 2 (Korn) für die visuelle Kontrolle der optimal mechanischen Belastung des Bauteils auf den Dämpfungskörper 15 des Schwingungsdämpfers 1 ermöglicht, die auch als visueller Justiermechanismus der Vorrichtung angesehen werden kann. Diesen Ausführungen wird hinzu gefügt, dass der Außendurchmesser des Schraubenbolzens der Einstellkopfschraube 2 größer dem Außendurchmesser der Führungskopfschraube 8 ist.

Der Dämpfungskörper 15, dessen Funktion mehrere Elemente umfasst, auf die (aus Gründen) nicht näher eingegangen wird, umfasst - neben diesen weiteren gehäuseintern angeordneten und funktionell verknüpften Elemente - den erwähnten Dämpfungskörper 15, der (funktionell betrachtet) ein axial einfeder- und zurückfederndes Element ist. Mit diesen funktionell verknüpften Elementen wird die Dämpfung durch den Schwingungsdämpfer 1 umgesetzt. Die Auflagefläche 17 des Dämpfungskörpers 15 ist parallel gelegen, ebenso wie die untere und obere Klemmplatte 3 und 4 sowie der zwischen letzteren eingeklemmte Halter 12, die auch parallel angeordnet sind, wobei der Halter 12 ist an einem im rechten Winkel lastenden Bauteil befestigt ist. Das Schraubengewinde der Einstellkopfschraube 2 ist dem Innengewinde des ersten Gewindeloches 22 der unteren Klemmplatte 3 bis zu einer mittleren Schraubeneinstellposition geschraubt. Sofern der Schraubenkopf 21 der Einstellkopfschraube 2 zu einer dem Schraubenkopfumfang zulaufenden Messkante S geformt ist, und einem Messkopf mit Kerbe 27, dem am oberen Ende des Stiftbolzens des Justierstiftes 9 eine Kerbe eingearbeitet ist, dessen Vertiefung ebenfalls parallel ist, wird die Messkante S als Korn und die Kerbe als Kimme benutzt, mit denen ein visueller Justiermechanismus realisiert ist, mit dem die Lagerung des Bauteils, das dem Halter 12 mechanisch verbunden ist, maßgeblich über die Flucht 31 zwischen Kimme und Korn während unterschiedlicher Einstellsituationen (nach den Figuren 3 bis 6) visuell kontrolliert wird. Ferner ist eine zweite Schraubenachse 18 der Führungskopfschraube 8 schraubenachsenparallel und definitiv beabstandet der ersten Schraubenachse 16 der Einstellkopfschraube 2 angeordnet. Dabei ist der Hohlraum-Durchmesser d_{B} im Bereich des Schraubenbolzens der Führungskopfschraube 8 größer dem Schraubenbolzen-Durchmesser d_{S} (Langloch) der Führungskopfschraube 8 im Bereich des Schraubenkopfes ausgeführt.

Der bolzenendseitige Durchmesser der Verdickung des Justierstiftes 9 ist kleiner dem Hohlraum-Durchmesser d_{S} (Gewinde-Innendurchmesser der unteren Klemmplatte 3) im Bereich des Schraubenkopfes der Führungsschraube 8, um jederzeit die Führungskopfschraube 8 einschließlich des Justierstiftes 9 einschrauben zu können.

Femer sind alle bewegten Schraubenverbindungen durch einen Sicherungsdraht gegen unbeabsichtigtes Lösen formschlüssig verbunden.

In der Fig. 2 wird die Befestigungsöffnung für die Vorrichtung zur kontrollierten Lagerung von Bauteilen auf einem Schwingungsdämpfer in den Halter 12 dargestellt, der als ebene Platte ausgeführt ist, in deren Profilquerschnitt ein drittes Loch 28 (Kreisloch) und ein nebengelegenes viertes Loch 29 (Langloch), dessen gleichlaufend zum Kreisloch verlaufende Durchlochung zum Zentrum des Kreisloches gerichtet ist, ausgespart ist, wobei die Lochaussparungen ineinander einmünden. Der Lochdurchmesser des Kreisloches ist größer als der Außendurchmesser der Einstellkopfschraube 2 und der Lochdurchmesser des Langlochs ist größer als der Außendurchmesser der Führungskopfschraube 8.

Man kann davon ausgehen, dass der Außendurchmesser des dritten Loches 28 deutlich größer ist als der Schraubendurchmesser der Einstellkopfschraube 2, damit die geforderte Einstellung erreicht wird, und das als Langloch ausgebildete vierte Loch 29 in der Breite etwas größer als der Schraubendurchmesser der Führungskopfschraube 8 sowie auch in der Länge groß genug ist, um die volle Bewegungsfreiheit der Einstellkopfschraube 2 nicht zu behindern, und damit gleichzeitig in dem zu befestigenden Halter 12 (vor geschehener Einstellung der Vorrichtung) beweglich und gegen Verdrehen gesichert ist

In den Figuren 3 bis 6 werden vier Situationen dargestellt, die einmal den unbelasteten Zustand und in den drei anderen Situationen jeweils den belasteten Zustand zeigen, wobei die belasteten Zustände beispielsweise die maximale, die minimale und die neutrale Toleranzabweichung der Befestigungspunkte, auf welchen die Schwingungsdämpfer positioniert sind, in der Höhe wiedergeben. Aus diesen Prinzipdarstellungen wird ersichtlich, dass bei einer unterschiedlichen Bauteiltoleranz eines halterbefestigten Bauteils, das auf dem Schwingungsdämpfer 1 lastet, mittels der Einstellkopfschraube 2 die Flucht 31 zwischen dem Justierstift 9 und der Einstellkopfaube 2 durch die Veränderung der Eindrücktiefe in den Schwingungsdämpfer 1 (in den Dämpfungskörper 15) eingestellt werden kann. Aus diesen Darstellungen erkennt man, dass
a) bei einem unbelasteten Schwingungsdämpfer (auch "Shock Mount" genannt) der Justierstift 9 und damit der Messkopf 27 unterhalb der Schrauben-Messkante liegt;
b) bei einer Belastung über die Auflagekonsole (Brackets) die Einstellkopfschraube 2 über den Dämpfungskörper 15 (gewissermaßen= in den "Shock Mount" eintaucht und um den selben Weg der Justierstift 9 sich relativ vertikal in Richtung der Schrauben-Messkante bewegt;
c) bei unterschiedlichen Bauteiltoleranzen mit Hilfe der Einstellkopfschraube 2 der Justierstift 9 immer mit der Schrauben-Meßkante fluchtet, wenn die richtige Belastung erreicht wird;
d) die Länge des Justierstiftes 9 grundsätzlich nach einer vorgegebenen Last bestimmt wird.

Hierzu wird in der Fig. 3 die unbelastete Stellung einer Vorrichtung bei einem mit dem Schwingungsdämpfer 1 verbindenden Bauteil gezeigt, wobei zwischen Kimme und Korn ein sichtbarer Höhenunterschied SL angezeigt wird. In der Fig. 4 wird über den Justierstift 9 die Einstellung der Vorrichtung ohne Höhen-Abweichung offenbart. Mit der Fig. 5 wird die Einstellung einer strukturell (beispielsweise +3 mm Toleranzausgleich) vertikal angehobenen Vorrichtung gezeigt, bei welcher nach der Justierung mit der Einstellkopfschraube 2 die Toleranzen von +3 mm ausgeglichen wurden. Mit der Fig. 6 wird die Einstellung einer strukturell (beispielsweise -3 mm Toleranzausgleich) vertikal abgesenkten Vorrichtung gezeigt, bei welcher nach der Justierung mit der Einstellkopfschraube 2 die Schlupf-Abweichung von -3 mm ausgeglichen wurde. Aus diesen Figuren 3 bis 6 kann man unschwer die Konfiguration(en) einmal im unbelasteten Zustand und dreimal im belasteten Zustand erkennen.

### Bezugszeichen

- 1: Schwingungsdämpfer
- 2: Einstellkopfschraube, hohlkörperaxial
- 3: untere Klemmplatte (Gewindeplatte)
- 4: obere Klemmplatte (Lochplatte)
- 5: Schraubenmutter (Kontermutter)
- 6: Befestigungskopfschraube
- 7: Unterlegscheibe
- 8: Führungskopfschraube
- 9: Justierstift
- 10: Druckfeder
- 11: Sicherungsloch (für Sicherungsdraht)
- 12: Halter (ebene Platte am Bauteil)
- 13: Gehäuse (des Schwingungsdämpfers 1)
- 14: Stützkörper
- 15: Dämpfungskörper (des Schwingungsdämpfers 1)
- 16: erste Schraubenachse (der Einstellkopfschraube 2)
- 17: ebene Auflagefläche (des Dämpfungskörpers 15)
- 18: Stützfläche (randseitlicher Teilbereich der Gehäuse-Deckfläche)
- 19: Stützfuß (des Justierstiftes 9)
- 20: Schraubenkopf (der Einstellkopfschraube 2)
- 21: Profillängsachse (Halter- oder Plattenlängsachse)
- 22: erstes Gewindeloch (der unteren Klemmplatte 3)
- 23: zweites Gewindeloch (der unteren Klemmplatte 3)
- 24: erstes Loch (der oberen Klemmplatte 4)
- 25: zweites Loch (der oberen Klemmplatte 4)
- 26: drittes Gewindeloch (des Dämpfungskörpers 15)
- 27: Messkopf (des Justierstiftes 9)
- 28: drittes Loch; Kreisloch (des Halters 12)
- 29: viertes Loch; Langloch (des Halters 12)
- 30: Struktur (Auflage des Schwingungsdämpfers)
- 31: Flucht (visuelle Messlinie)
- 32: zweite Schraubenachse (der Einstellkopfschraube 8)

- S: Messkante (des spitzzulaufenden Schraubenkopfes der Einstellkopfschraube 2)
- SL: sichtbarer Höhenunterschied (maßlicher Abstand)
- d_{B}: Durchmesser des Bolzens der Führungskopfschraube 8)
- d_{S}: Hohlraum-Durchmesser (im Bereich des Schraubenkopfes der Führungskopfschraube 8)

## Patentansprüche

1. Vorrichtung zur kontrollierten Lagerung von Bauteilen mit einem Schwingungsdämpfer (1), dessen Gehäuse (13) an einer Struktur (30) befestigbar ist, wobei gehäuseintern ein H Dämpfungskörper (15) angeordnet ist, der die auf ihn übertragenen mechanischen Belastungen und Schwingungen von oder auf ein Bauteil, an dem ein Halter (12) befestigbar ist, aufnimmt, wobei der Halter (12) die Belastungen des Bauteils über weitere in Verbindung stehende Verbindungs- und Befestigungselemente auf den Schwingungsdämpfer (1) übertragt,
**dadurch gekennzeichnet, dass** flächenparallel einer Auflagefläche (17) des Dämpfungskörpers (15) eine untere und eine obere Klemmplatte (3, 4) angeordnet sind, zwischen denen der Halter (12) geklemmt ist, und eine hohlkörperaxiale Einstellkopfschraube (2), die rechtwinklig auf der Auflagefläche (17) positioniert ist, durch übereinander angeordnete Löcher dieses Klemmplatten-Halter-Aufbaus geführt ist, von denen ein Loch, das der unteren Klemmplatte (3) zugeordnet ist, als ein erstes Gewindeloch (22) ausgebildet ist, dem die Einstellkopfschraube (2) bis zu einer definierten Schraubeneinstellposition eingeschraubt ist, und eine Befestigungskopfschraube (6) durch den einer ersten Schraubenachse (16) axial gelegenen Schraubenhohlraum der Einstellkopfschraube (2) geführt ist, die einem dritten Gewindeloch (26) des Dämpfungskörpers (15), das letzterem in Verlängerung der ersten Schraubenachse (16) positioniert und geschraubt ist, und eine Schraubenmutter (5) unterseitig einem Schraubenkopf (20) der Einstellkopfschraube (2) eingeschraubt ist, die gegen die obere Klemmplatte (4) angezogen ist, und eine hohlkörperaxiale Führungskopfschraube (8) parallel und im Abstand zur ersten Schraubenachse (16) durch weitere übereinander angeordnete Löcher des Klemmplatten-Halter-Aufbaus geführt ist, von denen ein weiteres Loch, das der unteren Klemmplatte (3) zugeordnet ist, als ein zweites Gewindeloch (23) ausgebildet ist, dem die Führungskopfschraube (8), deren Schraubenkopf gegen die obere Klemmplatte (4) angezogen ist, geschraubt ist, sowie ein Justierstift (9) durch den einer zweiten Schraubenachse (32) axial gelegenen Schraubenhohlraum der Führungskopfschraube (8) geführt ist, der achsenfreibeweglich und rechtwinklig auf einer Stützfläche (18) gehäuserandseitlich positioniert ist, die ein Teilbereich der Deckfläche des Gehäuses (13) ist, wobei dem Justierstift (9) am gegenüber liegenden Stiftende ein Messkopf (27) zugeordnet ist, der sich zur gegenüber befindlichen Messunterkante des Schraubenkopfes der Einstellkopfschraube (2) fluchten lässt, mit dem ein visueller Justiermechanismus realisiert ist.

2. **Vorrichtung** nach Anspruch 1, **dadurch gekennzeichnet, dass** dem Halter (12) und den beiden Klemmplatten (3, 4) entlang einer Profillängsachse (21) jeweils zwei Löcher, die zueinander beabstandet angeordnet sind, übereinander liegend ausgenommen sind, wobei die Löcher der Klemmplatten (3, 4) kongruent angeordnet sind und die Löcher der unteren Klemmplatte (3) als Gewindelöcher (22, 23) ausgebildet sind.

3. **Vorrichtung** nach einem der Ansprüche 1 oder 2, **dadurch gekennzeichnet, dass** die Einstellkopfschraube (2) durch ein erstes Loch (24) der oberen Klemmplatte (4) und ein drittes Loch (28) des Halters (12) geführt ist, deren Schraubengewinde in dem ersten Gewindeloch (22) der unteren Klemmplatte (3) geschraubt ist.

4. Vorrichtung nach Anspruch 1, **dadurch gekennzeichnet, dass** die Befestigungskopfschraube (6) auf der Auflagefläche (17) des Dämpfungskörpers (15) dermaßen positioniert ist, dass der schraubenbolzenendseitige Schraubenhohlquerschnitt der Einstellschraube (2) umfänglich dem dritten Gewindeloch (26) des Dämpfungskörpers (15) positioniert ist.

5. Vorrichtung nach Anspruch 1, **dadurch gekennzeichnet, dass** durch die Schraubenverbindung der Schraubenmutter (5), die gegen die obere Klemmplatte (4) mit einem definierten Schraubendrehmoment angezogen wird, eine kraftschlüssige Verbindung des Halters (12) in der ebenen und eine formschlüssige Verbindung in der hierzu rechtwinkligen Lage des halterbefestigten Bauteils realisiert ist.

6. Vorrichtung nach Anspruch 1, **dadurch gekennzeichnet, dass** die Führungskopfschraube (8) durch ein zweites Loch (25) der oberen Klemmplatte (4) und ein als Langloch ausgebildetes viertes Loch (29) des Halters (12) geführt ist, deren Schraubengewinde dem zweiten Gewindeloch (23) der unteren Klemmplatte (3) geschraubt ist.

7. Vorrichtung nach Anspruch 1, **dadurch gekennzeichnet, dass** der Außendurchmesser des Schraubenbolzens der Einstellkopfschraube (2) größer demjenigen der Führungskopfschraube (8) ist.

8. Vorrichtung nach einem der Ansprüche 1 oder 2, **dadurch gekennzeichnet, dass** der Halter (12) als ebene Platte ausgeführt ist, in dessen Profilquerschnitt das drittes Loch (28), welches als Kreisloch ausgebildet ist, und das nebengelegene vierte Loch (29), welches als Langloch ausgebildet ist, dessen gleichlaufend zum dritten Loch (28) verlaufende Durchlochung zum Zentrum des Kreisloches gerichtet ist, ausgespart ist, wobei die Lochaussparungen einander einmünden.

9. **Vorrichtung** nach Anspruch 8, **dadurch gekennzeichnet, dass** der Lochdurchmesser des dritten Loches (28) um das Maß größer ist als der Außendurchmesser der Einstellkopfschraube (2), welches für den geplanten Toleranzausgleich in dieser Ebene erforderlich ist, und der Lochdurchmesser und die Länge des vierten Loches (29) mit dem Außendurchmesser der Führungskopfschraube (8) über den gesamten Einstellbereich freie Bewegungen zulässt, solange die untere Klemmplatte (3) mit der oberen Klemmplatte (4) über die Schraubenmutter (5) und über die Führungskopfschraube (8) nicht fest verschraubt sind.

10. Vorrichtung nach Anspruch 1, **dadurch gekennzeichnet, dass** der Dämpfungskörper (15) ein im rechten Winkel einfeder- und zurückfedemdes Mittel ist, mit dem neben weiteren gehäuseintern angeordneten und funktionell verknüpften Mitteln die Dämpfung durch den Schwingungsdämpfer (1) umgesetzt wird.

11. **Vorrichtung** nach Anspruch 1, **dadurch gekennzeichnet, dass** die Auflagefläche (17) des Dämpfungskörpers (15), die untere und obere Klemmplatte (3, 4) und der zwischen letzteren eingeklemmte Halter (12) parallel angeordnet sind.

12. Vorrichtung nach einem der Ansprüche 1 oder 11, **dadurch gekennzeichnet, dass** der Halter (12) an einem vorwiegend vertikal lastenden Bauteil befestigbar ist.

13. **Vorrichtung** nach Anspruch 1, **dadurch gekennzeichnet, dass** das Schraubengewinde der Einstellkopfschraube (2) dem Innengewinde des ersten Gewindeloches (22) der unteren Klemmplatte (3) bis zu einer mittleren Schraubeneinstellposition geschraubt ist.

14. **Vorrichtung** nach Anspruch 1, **dadurch gekennzeichnet, dass** der Schraubenkopf (20) der Einstellkopfschraube (2) zu einer dem Schraubenkopfumfang zulaufenden Messkante (S) geformt ist.

15. Vorrichtung nach Anspruch 1, **dadurch gekennzeichnet, dass** sich ein Stützfuß (19) am Ende des Justierstiftes (9) befindet, an dem eine Druckfeder (10) anliegt, deren Federenden gegen den Stützfuß (19) und gegen den Gewindeschaft der Führungskopfschraube (8) gedrückt sind.

16. Vorrichtung nach einem der Ansprüche 1 oder 15, **dadurch gekennzeichnet, dass** an der Gegenseite des Stützfußes (19) des Justierstiftes (9) ein Messkopf (27) mit dem Justierstift (9) verbunden ist, in dem sich messkopfumfänglich eine Kerbe befindet.

17. **Vorrichtung** nach einem der Ansprüche 1, 15 oder 16 **dadurch gekennzeichnet, dass** zwischen dem Messkopf (27) des Justierstiftes (9) und der Messkante des Schraubenkopfes (20) der Einstellkopfschraube (2) eine Flucht (31) umsetzbar ist, deren Lage maßgeblich für die visuelle Kontrolle der mechanischen Belastung des Bauteils auf den Dämpfungskörper (15) des Schwingungsdämpfers (1) ist.

18. **Vorrichtung** nach einem der Ansprüche 1 oder 17, **dadurch gekennzeichnet, dass** die Flucht (31) mit der als Kimme verwendeten Kerbe und der als Korn verwendeten Messkante (S) realisiert ist.

19. **Vorrichtung** nach Anspruch 1, **dadurch gekennzeichnet, dass** der Durchmesser (d_{B}) der Führungskopfschraube (8) kleiner dem Hohlraum-Durchmesser (d_{S}) des als Langloch ausgebildeten vierten Loches (29) des Halters (12) und des zweiten Loches (25) der oberen Klemmplatte (4) ist.

20. **Vorrichtung** nach Anspruch 1, **dadurch gekennzeichnet, dass** die Schraubenachse (32) der Führungsschraube (8) schraubenachsenparallel und definitiv beabstandet zu der Schraubenachse (16) der Einstellschraube (2) angeordnet ist.

21. **Vorrichtung** nach einem der Ansprüche 1, 15 oder 16, **dadurch gekennzeichnet, dass** der Durchmesser des Stützfußes (19) des Justierstiftes (9) kleiner dem Hohlraum-Durchmesser (d_{S}) des vierten Loches (29) des Halters (12) sowie des zweiten Loches (25) der oberen Klemmplatte (4) und dem freien Gewinde-Innendurchmesser des Gewindeloches (23) ist.

22. Vorrichtung nach Anspruch 15, **dadurch gekennzeichnet, dass** am Ende des Justierstiftes (9) oberhalb des Schraubenkopfes der Führungskopfschraube (8) ein Messkopf angeordnet ist.

23. **Vorrichtung** nach Anspruch 1, **dadurch gekennzeichnet, dass** das Gehäuse (13) auf der Grundfläche auf einem Stützkörper (14) befestigt ist, der an einer ungedämpften Auflagefläche der Struktur (30) befestigbar ist.

24. Vorrichtung nach Anspruch 1, **dadurch gekennzeichnet, dass** alle sich möglicherweise unbeabsichtigt lösbaren Schraubenverbindungen durch einen Sicherungsdraht, der durch jeweils ein Sicherungsloch (11), das sich am Schraubenkopf der Befestigungskopfschraube (6) und in dem Schraubenkopf der Führungskopfschraube (8) befindet, geführt sind, wobei damit diese Elemente gegen unbeabsichtigtes Lösen formschlüssig verbunden sind.

## Claims

1. Device for providing a controlled mounting for components, incorporating a vibration damper (1), the housing (13) of which can be secured to a structure (30), and a damping body (15) is disposed inside the housing to absorb the mechanical loads and vibrations transmitted to it from or on a component to which a holder (12) can be secured, which holder (12) transmits the loads of the component via other inter-connected connecting and fixing elements to the vibration damper (1), **characterised in that**, disposed surface-parallel with a support surface (17) of the damping body (15) are a bottom and a top clamping plate (3, 4), between which the holder (12) is clamped, and a hollow-body axial adjusting head screw (2) positioned on the support surface (17) at a right angle is inserted through holes of this clamping plates-holder assembly disposed one above the other, of which one hole assigned to the bottom clamping plate (3) is provided in the form of a first threaded hole (22) into which the adjusting head screw (2) is screwed as far as a defined screw setting position, and, inserted through the screw cavity of the adjusting head screw (2) oriented axially along a first screw axis (16), is a fixing head screw (6), which is positioned in and screwed into a third threaded hole (26) of the damping body (15) constituting an extension of the first screw axis (16), and a nut (5) is screwed onto the bottom end of a screw head (20) of the adjusting head screw (2) which is tightened down on the top clamping plate (4), and a hollow-body axial guiding head screw (8) is inserted parallel with and at a distance from the first screw axis (16) through other holes of the clamping plates-holder assembly disposed one above the other, of which another hole assigned to the bottom clamping plate (3) is provided in the form of a second threaded hole (23) into which is screwed the guiding head screw (8), the screw head of which is tightened down against the top clamping plate (4), and, inserted through the screw cavity of the guiding head screw (8) oriented axially along a second screw axis (32), is an adjusting pin (9) which is positioned laterally at the housing periphery at a right angle and axially freely displaceable on a support surface (18) constituting a part-region of the cover surface of the housing (13), which adjusting pin (9) has on the oppositely lying pin end a measuring head (27) which can be placed flush with the oppositely disposed measuring bottom edge of the screw head of the adjusting head screw (2), thereby providing a visual adjusting mechanism.

2. Device as claimed in claim 1, **characterised in that** two respective holes spaced at a distance apart and lying one above the other are cut out from the holder (12) and the two clamping plates (3, 4) along a profile longitudinal axis (21), the holes of the clamping plates (3, 4) being disposed congruently, and the holes of the bottom clamping plate (3) are provided in the form of threaded holes (22, 23).

3. Device as claimed in one of claims 1 or 2, **characterised in that** the adjusting head screw (2) is inserted through a first hole (24) of the top clamping plate (4) and a third hole (28) of the holder (12), the screw thread of which is screwed into the first threaded hole (22) of the bottom clamping plate (3).

4. Device as claimed in claim 1, **characterised in that** the fixing head screw (6) is positioned on the support surface (17) of the damping body (15) in such a way that the screw cavity cross-section of the adjusting screw (2) at the screw bolt end is positioned surrounding the periphery of the third threaded hole (26) of the damping body (15).

5. Device as claimed in claim 1, **characterised in that**, due to the screw connection of the nut (5) which is tightened down on the top clamping plate (4) with a defined screw torque, a non-positive connection of the holder (12) is obtained when the component secured by the holder is in the planar position and a positive connection is obtained in the position at a right angle thereto.

6. Device as claimed in claim 1, **characterised in that** the guiding head screw (8) is inserted through a second hole (25) of the top clamping plate (4) and a fourth hole (29) of the holder (12) provided in the form of an elongate hole, the screw thread of which is screwed into the second threaded hole (23) of the bottom clamping plate (3).

7. Device as claimed in claim 1, **characterised in that** the external diameter of the screw bolt of the adjusting head screw (2) is bigger than that of the guiding head screw (8).

8. Device as claimed in one of claims 1 or 2, **characterised in that** the holder (12) is provided in the form of a flat plate, from the profile cross-section of which the third hole (28), which is a circular hole, is cut out, and the adjacently lying fourth hole (29), which is an elongate hole, is positioned with the part of its cut-out conforming to the same contour as the third hole (28) directed towards the centre of the circular hole, as a result of which the hole cut-outs open into one another.

9. Device as claimed in claim 8, **characterised in that** the hole diameter of the third hole (28) is bigger than the external diameter of the adjusting head screw (2) by the amount needed to compensate for the planned tolerance in this plane, and the hole diameter and length of the fourth hole (29) in conjunction with the external diameter of the guiding head screw (8) permits free movements across the entire adjustment region provided the bottom clamping plate (3) is not tightly screwed to the top clamping plate (4) by means of the nut (5) and by means of the guiding head screw (8).

10. Device as claimed in claim 1, **characterised in that** the damping body (15) is a means which springs inwards and rebounds at a right angle, by means of which, together with other functionally linked means disposed inside the housing, the damping is effected by the vibration damper (1).

11. Device as claimed in claim 1, **characterised in that** the support surface (17) of the damping body (15), the bottom and top clamping plate (3, 4) and the holder (12) clamped between the latter are disposed parallel.

12. Device as claimed in one of claims 1 or 11, **characterised in that** the holder (12) can be secured to a component which applies a predominantly vertical load.

13. Device as claimed in claim 1, **characterised in that** the screw thread of the adjusting head screw (2) is screwed into the internal thread of the first threaded hole (22) of the bottom clamping plate (3) as far as a middle screw adjustment position.

14. Device as claimed in claim 1, **characterised in that** the screw head (20) of the adjusting head screw (2) is shaped with a screw head periphery which tapers to form a measuring edge (S).

15. Device as claimed in claim 1, **characterised in that** a support foot (19) is provided on the end of the adjusting pin (9), against which a compression spring (10) sits, the spring ends of which are compressed against the support foot (19) and against the threaded shaft of the guiding head screw (8).

16. Device as claimed in one of claims 1 or 15, **characterised in that** a measuring head (27) is connected to the adjusting pin (9) at the end opposite the support foot (19) of the adjusting pin (9), in which a notch is circumferentially disposed in the measuring head.

17. Device as claimed in one of claims 1, 15 or 16, **characterised in that** an alignment (31) can be established between the measuring head (27) of the adjusting pin (9) and the measuring edge of the screw head (20) of the adjusting head screw (2), the position of which is relevant to visually checking the mechanical load of the component on the damping body (15) of the vibration damper (1).

18. Device as claimed in one of claims 1 or 17, **characterised in that** the alignment (31) is achieved on the basis of the notch which is used as a rear sight and the measuring edge (S) which is used as a front sight.

19. Device as claimed in claim 1, **characterised in that** the diameter (d_{B}) of the guiding head screw (8) is smaller than the cavity diameter (d_{S}) of the fourth hole (29) of the holder (12) provided in the form of an elongate hole and the second hole (25) of the top clamping plate (4).

20. Device as claimed in claim 1, **characterised in that** the screw axis (32) of the guiding screw (8) is disposed with its screw axis parallel with and definitively spaced apart from the screw axis (16) of the adjusting screw (2).

21. Device as claimed in one of claims 1, 15 or 16, **characterised in that** the diameter of the support foot (19) of the adjusting pin (9) is smaller than the cavity diameter (d_{S}) of the fourth hole (29) of the holder (12) and of the second hole (25) of the top clamping plate (4) and the free threaded internal diameter of the threaded hole (23).

22. Device as claimed in claim 15, **characterised in that** a measuring head is disposed on the end of the adjusting pin (9) above the screw head of the guiding head screw (8).

23. Device as claimed in claim 1, **characterised in that** the housing (13) is secured at the base surface on a support body (14), which can be secured to a non-damped support surface of the structure (30).

24. Device as claimed in claim 1, **characterised in that** all screw connections which might possibly become unintentionally loose are guided by a securing wire disposed respectively through a securing hole (11) disposed on the screw head of the fixing head screw (6) and in the screw head of the guiding head screw (8), as a result of which these elements are positively connected to prevent them from unintentionally loosening.

## Revendications

1. Dispositif pour le soutien contrôlé de pièces, avec un amortisseur de vibrations (1) dont le boîtier (13) peut être fixé à une structure (30), à l'intérieur du boîtier étant disposé un corps amortisseur (15) qui absorbe les sollicitations mécaniques et les vibrations qui lui sont transmises par une pièce à laquelle peut être fixé un organe porteur (12) ou qui sont imposées à cette pièce, l'organe porteur (12) transmettant les sollicitations de la pièce à l'amortisseur de vibrations (1) par l'intermédiaire d'éléments supplémentaires de liaison et de fixation, **caractérisé en ce que**, parallèlement à une portée (17) du corps amortisseur (15), sont disposées des plaques de serrage inférieure et supérieure (3, 4) entre lesquelles est serré l'organe porteur (12), une vis de réglage à tête à corps axial creux (2) positionnée perpendiculairement sur la surface d'appui (17) traverse des trous superposés de cet ensemble plaques de serrage-organe porteur, parmi lesquels un trou associé à la plaque de serrage inférieure (3) est conformé en premier trou taraudé (22) dans lequel la vis de réglage à tête (2) est vissée jusqu'à une position de réglage de vis définie, une vis de fixation à tête (6) traverse la cavité de vis, disposée axialement par rapport à un premier axe de vis (16), de la vis de réglage à tête (2) et est positionnée et vissée dans un troisième trou taraudé (26) du corps amortisseur (15) qui est ainsi positionné et vissé au moyen de celui-ci dans le prolongement du premier axe de vis (16), un écrou de vis (5) est vissé sous une tête de vis (20) de la vis de réglage à tête (2) et est serré contre la plaque de serrage supérieure (4), une vis de guidage à tête à corps axial creux (8) traverse parallèlement et à distance du premier axe de vis (16) des trous supplémentaires superposés de l'ensemble plaques de serrage-organe porteur, parmi lesquels un trou supplémentaire associé à la plaque de serrage inférieure (3) est conformé en second trou taraudé (23) dans lequel est vissée la vis de guidage à tête (8) dont la tête de vis est appliquée contre la plaque de serrage supérieure (4), et une broche d'ajustage (9) traverse la cavité de vis, disposée axialement par rapport à un second axe de vis (32), de la vis de guidage à tête (8) et est positionnée avec une liberté de mouvement axial et perpendiculairement sur une surface d'appui (18), laquelle se trouve sur le bord du boîtier et constitue une zone partielle de la surface de recouvrement du boîtier (13), à la broche d'ajustage (9) étant associée, à son extrémité opposée, une tête de mesure (27) qui peut être amenée dans l'alignement de l'arête inférieure opposée de mesure de la tête de vis de la vis de réglage à tête (2) et qui constitue un mécanisme d'ajustage visuel.

2. Dispositif selon la revendication 1, **caractérisé en ce que** dans l'organe porteur (12) et dans les deux plaques de serrage (3, 4) sont réalisés l'un au-dessus de l'autre et à distance l'un de l'autre deux trous selon un axe longitudinal de profil (21), les trous des plaques de serrage (3, 4) étant coïncidents, et les trous de la plaque de serrage inférieure (3) étant conformés en trous taraudés (22, 23).

3. Dispositif selon une des revendications 1 ou 2, **caractérisé en ce que** la vis de réglage à tête (2) traverse un premier trou (24) de la plaque de serrage supérieure (4) et un troisième trou (28) de l'organe porteur (12) et son filetage est vissé dans le premier trou taraudé (22) de la plaque de serrage inférieure (3).

4. Dispositif selon la revendication 1, **caractérisé en ce que** la vis de fixation à tête (6) est positionnée sur la portée (17) du corps amortisseur (15), de façon que la section transversale creuse de vis de la vis de réglage (2) soit positionnée en périphérie du troisième trou taraudé (26) du corps amortisseur (15).

5. Dispositif selon la revendication 1, **caractérisé en ce que** la liaison vissée de l'écrou de vis (5) appliqué avec un couple de vissage défini contre la plaque de serrage supérieure (4) crée une liaison par conjugaison de forces avec l'organe porteur (12) dans la position plane de la pièce fixée à celui-ci et une liaison par complémentarité de formes dans la position perpendiculaire à celle-ci.

6. Dispositif selon la revendication 1, **caractérisé en ce que** la vis de guidage à tête (8) traverse un second trou (25) de la plaque de serrage supérieure (4) et un quatrième trou (29), conformé en trou oblong, de l'organe porteur (12), et son filetage est vissé dans le second trou taraudé (23) de la plaque de serrage inférieure (3).

7. Dispositif selon la revendication 1, **caractérisé en ce que** le diamètre extérieur de la tige filetée de la vis de réglage à tête (2) est supérieur à celui de la vis de guidage à tête (8).

8. Dispositif selon une des revendications 1 ou 2, **caractérisé en ce que** l'organe porteur (12) est conformé en plaque plane, dans la section transversale profilée de laquelle sont ménagés le troisième trou (28) conformé en trou circulaire et, à côté de celui-ci, le quatrième trou (29) qui est conformé en trou oblong et dont la perforation de même sens que le troisième trou (28) est orientée vers le centre du trou circulaire, les évidements des trous débouchant l'un dans l'autre.

9. Dispositif selon la revendication 8, **caractérisé en ce que** le diamètre de trou du troisième trou (28) est plus grand que le diamètre extérieur de la vis de réglage à tête (2) de la valeur nécessaire à la compensation des tolérances prévue dans ce plan, et le diamètre de trou et la longueur du quatrième trou (29) autorisent, avec le diamètre extérieur de la vis de guidage à tête (8), des mouvements libres sur toute la zone de réglage tant que la plaque de serrage inférieure (3) n'est pas vissée à fond avec la plaque de serrage supérieure (4) par l'intermédiaire de l'écrou de vis (5) et de la vis de guidage à tête (8).

10. Dispositif selon la revendication 1, **caractérisé en ce que** le corps amortisseur (15) est un moyen à enfoncement et retour élastiques à angle droit qui, avec d'autres moyens disposés à l'intérieur du boîtier et associés fonctionnellement à lui, permet à l'amortisseur de vibrations (1) de réaliser l'amortissement.

11. Dispositif selon la revendication 1, **caractérisé en ce que** la portée (17) du corps amortisseur (15), les plaques de serrage inférieure et supérieure (3, 4) et l'organe porteur (12) serré entre ces dernières sont disposés parallèlement.

12. Dispositif selon une des revendications 1 ou 11, **caractérisé en ce que** l'organe porteur (12) peut être fixé à une pièce exerçant une sollicitation principalement verticale.

13. Dispositif selon la revendication 1, **caractérisé en ce que** le filetage de la vis de réglage à tête (2) est vissé dans le taraudage du premier trou taraudé (22) de la plaque de serrage inférieure (3) jusqu'à une position moyenne de réglage de vis.

14. Dispositif selon la revendication 1, **caractérisé en ce que** la tête de vis (20) de la vis de réglage à tête (2) présente la forme d'une arête de mesure (S) qui va en se rétrécissant à partir de la périphérie de la tête de vis.

15. Dispositif selon la revendication 1, **caractérisé en ce qu'**à l'extrémité de la broche d'ajustage (9) se trouve un pied d'appui (19) sur lequel est appliqué un ressort de compression (10) dont les extrémités de ressort portent sur le pied d'appui (19) et sur la tige filetée de la vis de guidage à tête (8).

16. Dispositif selon une des revendications 1 ou 15, **caractérisé en ce que**, sur le côté de la broche d'ajustage (9) opposé au pied d'appui (19), une tête de mesure (27), dans la périphérie de laquelle est ménagée une encoche, est reliée à la broche d'ajustage (9).

17. Dispositif selon une des revendications 1, 15 ou 16, **caractérisé en ce qu'**entre la tête de mesure (27) de la broche d'ajustage (9) et l'arête de mesure de la tête de vis (20) de la vis de réglage à tête (2) peut être opéré un alignement (31) dont la position est déterminante pour le contrôle visuel de la sollicitation mécanique exercée par la pièce sur le corps amortisseur (15) de l'amortisseur de vibrations (1).

18. Dispositif selon une des revendications 1 ou 17, **caractérisé en ce que** l'alignement (31) est réalisé avec l'encoche servant de cran de mire et avec l'arête de mesure (S) servant de guidon de visée.

19. Dispositif selon la revendication 1, **caractérisé en ce que** le diamètre (d_{B}) de la vis de guidage à tête (8) est plus petit que le diamètre de cavité (d_{S}) du quatrième trou (29), conformé en trou oblong, de l'organe porteur (12) et du second trou (25) de la plaque de serrage supérieure (4).

20. Dispositif selon la revendication 1, **caractérisé en ce que** l'axe de vis (32) de la vis de guidage (8) est disposé parallèlement et nettement à distance de l'axe de vis (16) de la vis de réglage (2).

21. Dispositif selon une des revendications 1, 15 ou 16, **caractérisé en ce que** le diamètre du pied d'appui (19) de la broche d'ajustage (9) est plus petit que le diamètre de cavité (d_{S}) du quatrième trou (29) de l'organe porteur (12) ainsi que du second trou (25) de la plaque de serrage supérieure (24) et du diamètre intérieur libre taraudé du trou taraudé (23).

22. Dispositif selon la revendication 15, **caractérisé en ce qu'**une tête de mesure est disposée à l'extrémité de la broche d'ajustage (9) au-dessus de la tête de vis de la vis de guidage à tête (8).

23. Dispositif selon la revendication 1, **caractérisé en ce que** le boîtier (13) est fixé à la surface de base par l'intermédiaire d'un corps d'appui (14) qui peut être fixé à une surface de pose non amortie de la structure (30).

24. Dispositif selon la revendication 1, **caractérisé en ce que** toutes les liaisons vissées susceptibles de se détacher accidentellement sont reliées chacune par un fil métallique de sécurité qui traverse un trou de sécurité (11) placé respectivement sur la tête de vis de la vis de fixation à tête (6) et dans la tête de vis de la vis de guidage à tête (8), ces éléments ainsi reliés par complémentarité de formes étant protégés contre un détachement accidentel.
